(19) Europäisches Patentamt
European Patent Office
Office européen des brevets

(11) **EP 4 548 764 A1**

(12) **EUROPEAN PATENT APPLICATION**

(43) Date of publication:
07.05.2025 Bulletin 2025/19

(21) Application number: 23207806.3

(22) Date of filing: 03.11.2023

(51) International Patent Classification (IPC):
*A01N 31/02* (2006.01)        *A01N 25/30* (2006.01)
*A01P 21/00* (2006.01)

(52) Cooperative Patent Classification (CPC):
(C-Sets available)
A01P 21/00; A01N 31/02        (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sasol Chemie GmbH & Co. KG**
**20537 Hamburg (DE)**

(72) Inventors:
• **Lüssem, Bernd**
**Haltern am See (DE)**

• **Jürgens, Desiree**
**Herten (DE)**
• **Bösing, Ludger**
**Dorsten (DE)**
• **Colombo, Giovanni**
**Inveruno (IT)**
• **Tannir, Bassam**
**Brussels (BE)**

(74) Representative: **Müller Schupfner & Partner
Patent- und Rechtsanwaltspartnerschaft mbB
(Hamburg)
Schellerdamm 19
21079 Hamburg (DE)**

(54) **TOBACCO SUCKER CONTROL COMPOSITION AND METHOD FOR INHIBITING SUCKER GROWTH IN TOBACCO PLANTS**

(57) The invention relates to a tobacco sucker control composition comprising 75 wt% to 90 wt% of a fatty alcohol and 25 wt% to 10 wt% of an emulsifier, wherein the emulsifier comprises a vegetable oil alkoxylate and optionally an alkyl glycol ester. The invention further extends to a tobacco sucker control aqueous emulsion comprising the tobacco sucker control composition, and to a method and use of the tobacco sucker control composition and the tobacco sucker control aqueous emulsion for inhibiting sucker growth in tobacco plants.

EP 4 548 764 A1

(52)  Cooperative Patent Classification (CPC): (Cont.)

C-Sets
**A01N 25/30, A01N 25/30;**
**A01N 31/02, A01N 25/30**

**Description**

**FIELD OF THE INVENTION**

This invention relates to a tobacco sucker control composition and to a method for inhibiting sucker growth in tobacco plants.

**BACKGROUND OF THE INVENTION**

In their growth cycle, tobacco plants develop a flower which diverts nutrients from the leaves to the flower. Therefore, in tobacco production where the leaves are the desired product, the flower is cut off when it starts to develop. Cutting off the flower is commonly known as "topping". Topping allows leaves in the upper part of the plant to continue to grow and thus improves the total yield of leaves from the tobacco plant. However, topping stimulates the growth of auxiliary buds (suckers) at the leaf axil along the length of the stem, which is unwanted.

Sucker growth is typically controlled by applying sucker control chemicals which contain fatty alcohols in combination with surfactants, in a process commonly referred to a "desuckering". The use of sucker control chemicals is a commercially advantageous alternative to what would otherwise be a labour-intensive manual operation of topping (i.e., the removal of buds or flowers) and subsequent removal of suckers by hand.

Desuckering allows improved nutrient uptake by the tobacco plant by increased root growth, which results in the tobacco plant growing large leaves with a high nicotine content, which is a desired outcome for tobacco production. Sucker control chemicals are normally applied to the plant shortly before or after topping, since the buds are only susceptible to chemical control before they start to grow and elongate.

Tobacco sucker control compositions typically contain a range of alcohols from hexanol ($C_6$) to dodecanol ($C_{12}$) with Polysorbate 80 (polyoxyethylene (20) sorbitan monooleate) which is a widely used emulsifier in tobacco sucker control compositions. The fatty alcohol burns the suckers, while the tobacco leaves remain largely unaffected.

In use, tobacco sucker control compositions are diluted in water to form aqueous emulsion with typical concentrations of between about 2 wt% to about 6 wt%. The emulsifiers used in tobacco sucker control compositions enable aqueous emulsions of the fatty alcohols to be formed in water. In this manner, relatively small amounts of the fatty alcohols in the tobacco sucker control aqueous emulsion can be distributed over the tobacco plant. The use of emulsifiers in tobacco sucker control compositions also enables wetting on the tobacco plant.

There remains an opportunity to formulate a tobacco sucker control composition which, when emulsified in water, forms an emulsion that is at least as stable, but preferably more stable, than known emulsions of tobacco sucker control compositions, and which is effective in tobacco sucker control.

**DESCRIPTION OF THE INVENTION**

According to a first aspect of the invention, there is provided a tobacco sucker control composition, the tobacco sucker control composition comprising:

75 wt% to 90 wt% of a fatty alcohol; and
25 wt% to 10 wt% of an emulsifier, each based on the total weight of the tobacco sucker control composition; wherein the emulsifier comprises a vegetable oil alkoxylate and optionally an alkyl glycol ester.

In this specification, "wt%" is a shortened form of "weight percentage".

Preferably, the tobacco sucker control composition comprises from 79 wt% to 85 wt% of the fatty alcohol and from 21 wt% to 15 wt% of the emulsifier, each based on the total weight of the tobacco sucker control composition.

In one embodiment, the tobacco sucker control composition comprises from 79 wt% to 81 wt% of the fatty alcohol and from 21 wt% to 19 wt% of the emulsifier, each based on the total weight of the tobacco sucker control composition.

The emulsifier may comprise from 80 wt% to 100 wt% of the vegetable oil alkoxylate and from 0 wt% to 20 wt% of the alkyl glycol ester or from 80 wt% to 99.5 wt% of the vegetable oil alkoxylate and from 0.5 wt% to 20 wt% of the alkyl glycol ester, based on the total weight of the emulsifier.

Preferably, the emulsifier comprises from 90 wt% to 100 wt% of the vegetable oil alkoxylate and from 0 wt% to 10 wt% of the alkyl glycol ester or from 90 wt% to 99.5 wt% of the vegetable oil alkoxylate and from 0.5 wt% to 10 wt% of the alkyl glycol ester based on the total weight of the emulsifier.

In one embodiment, the emulsifier comprises from 95 wt% to 100 wt% of the vegetable oil alkoxylate and from 0 wt% to 5 wt% of the alkyl glycol ester, based on the total weight of the emulsifier.

In another embodiment, the emulsifier comprises from 95 wt% to 99.5 wt% of the vegetable oil alkoxylate and from 0.5 wt% to 5 wt% of the alkyl glycol ester, based on the total weight of the emulsifier.

Preferably, the fatty alcohol is a $C_6$ to $C_{12}$ linear fatty alcohol. More preferably, the fatty alcohol is a $C_8$ linear fatty alcohol, a $C_{10}$ linear fatty alcohol, or a mixture of a $C_8$ linear fatty alcohol and a $C_{10}$ linear fatty alcohol.

The vegetable oil alkoxylate is an alkoxylated triglyceride, preferably ethoxylated, where the triglyceride comprises at least one ester group with at least one hydroxy group. The vegetable oil alkoxylate may be a castor oil alkoxylate. Preferably, the vegetable oil alkoxylate or the castor oil alkoxylate is a vegetable oil ethoxylate / castor oil ethoxylate having from 5 to 50 mol ethoxylate (number average), preferably from 15 to 40 mol ethoxylate (number average). The ethoxylation degree refers to the ethoxylation of the molecule, which is per each triglyceride.

The alkyl glycol ester is obtainable by the alkoxylation of a triglyceride, preferably ethoxylation, in the presence of an alcohol, in particular a polyol. The triglyceride preferably has C8 to C22 ester groups and the alcohol preferably has 1 to 6 carbon atoms or in the case of a polyol preferably 2 to 6 carbon atoms. A suitable polyol is for example glycerol.

Preferably, the alkyl glycol ester is a triglyceride ethoxylated in the presence of glycerol.

The tobacco sucker control composition may further comprise optional ingredients selected from the group comprising pesticides, fertilizers, growth regulators, foam suppressors, drift control agents, and solubilizers.

The tobacco sucker control composition may be useful for inhibiting auxiliary bud growth in tobacco plants.

The tobacco sucker control composition may comprise water to form an aqueous emulsion, e.g. by way of dilution of the sucker control composition in water. The water may be water having a certain hardness, such as tap water.

Thus, according to a second aspect of the invention, there is provided a tobacco sucker control aqueous emulsion, the tobacco sucker control aqueous emulsion comprising 1 wt% to 10 wt% of a tobacco sucker control composition as hereinbefore described and 99 wt% to 90 wt% water, based on the total weight of the tobacco sucker control aqueous emulsion.

Preferably, the tobacco sucker control aqueous emulsion comprises 3 wt% to 8 wt% of a tobacco sucker control composition as hereinbefore described and 97 wt% to 92 wt% water, based on the total weight of the tobacco sucker control aqueous emulsion.

In one embodiment, the tobacco sucker control aqueous emulsion comprises about 5 wt% of a tobacco sucker control composition as hereinbefore described and about 95 wt% water, based on the total weight of the tobacco sucker control aqueous emulsion.

According to a third aspect of the invention, there is provided the use of the tobacco sucker control composition as hereinbefore described for inhibiting sucker growth in tobacco plants.

According to a fourth aspect of the invention, there is provided the use of the tobacco sucker control aqueous emulsion as hereinbefore described for inhibiting sucker growth in tobacco plants.

According to a fifth aspect of the invention, there is provided a method for inhibiting sucker growth in tobacco plants, the method comprising: applying the tobacco sucker control composition as hereinbefore described to a tobacco plant.

Applying the tobacco sucker control composition as hereinbefore described to the tobacco plant may be by spray application, in particular by foliar spray application.

According to a sixth aspect of the invention, there is provided a method for inhibiting sucker growth in tobacco plants, the method comprising: applying the tobacco sucker control aqueous emulsion as hereinbefore described to a tobacco plant.

Applying the tobacco sucker control aqueous emulsion as hereinbefore described to the tobacco plant may be by spray application, in particular by foliar spray application.

**EXPERIMENTAL RESULTS**

The invention will now be described with reference to the following non-limiting examples.

Comparative Compositions

As comparative tobacco sucker control compositions (i.e. standard commercial compositions), NACOL 10-98 was emulsified with different grades of Polysorbate 80 in a 79:21 (w/w) ratio.

NACOL 10-98 is a high purity $C_{10}$ linear fatty alcohol commercially available from Sasol Germany GmbH. Polysorbate 80 is a commercially available emulsifier used in tobacco sucker control applications. Polysorbate 80 is a sorbitan mono-oleate with 20 mol EO.

Three different Polysorbate 80 grades were used:

(i) Polysorbate 80 (standard grade);
(ii) Polysorbate 80 (cosmetic grade); and
(iii) DACOL MOS 20.

The Polysorbate 80 grades are commercially available from several suppliers, and DACOL MOS 20 is commercially available from Sasol Italy S.p.A. (Milan, Italy).

Inventive Compositions

Inventive tobacco sucker control compositions were prepared by emulsifying NACOL10-98 with each of the emulsifiers MARLOWET R20, MARLOWET R30, and MARLOWET R50, in a 79:21 (w/w) ratio. MARLOWET R20, MARLOWET R30, and MARLOWET R50 are castor oil ethoxylates with 20 mol EO, 30 mol EO, and 50 mol EO respectively, commercially available from Sasol Germany GmbH (Hamburg, Germany).

Further inventive tobacco sucker control compositions additionally comprise the alkyl glycol ester in the form of MARLOWET COE 329. MARLOWET COE 329 is commercially available from Sasol Italy S.p.A. (Milan, Italy) and is a coconut oil ethoxylated in the presence of glycerol.

Emulsion Stability Testing

For emulsion stability testing, 5 wt% of each of the comparative tobacco sucker control compositions and each of the inventive tobacco sucker control compositions were diluted in 95 wt% water of differing hardness (34.2, 342, and 1000 ppm $CaCl_2$) in a 100ml measuring cylinder and shaken 10 times. After being left to stand at ambient temperature (22°C) for 24 hours, the stability of each of the tobacco sucker control aqueous emulsions was evaluated visually.

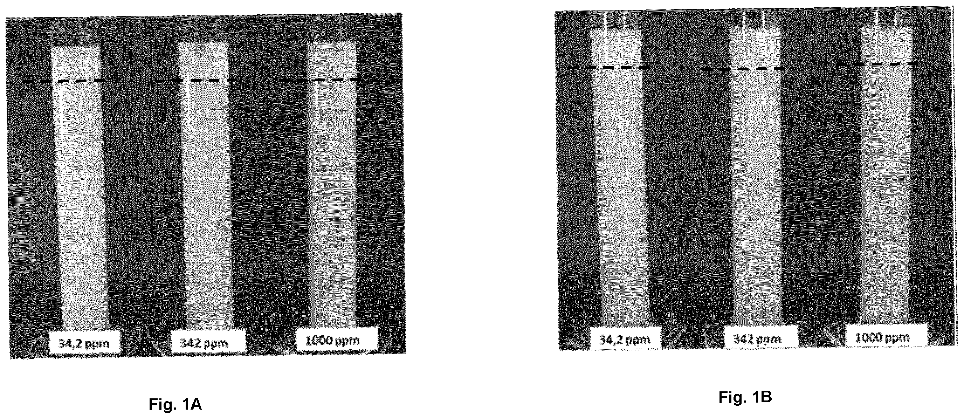

Figure 1A shows the tobacco sucker control aqueous emulsions formed from the NACOL10-98/Polysorbate 80 (cosmetic grade) tobacco sucker control composition (comparative) after 24 hours and Figure 1B shows the tobacco sucker control aqueous emulsions formed from the NACOL10-98/Polysorbate 80 (std. grade) tobacco sucker control composition (comparative) after 24 hours. The dashed line indicates where separation occurs in the emulsion. No significant difference could be observed in the stability of the tobacco sucker control aqueous emulsions produced from the comparative tobacco sucker control compositions.

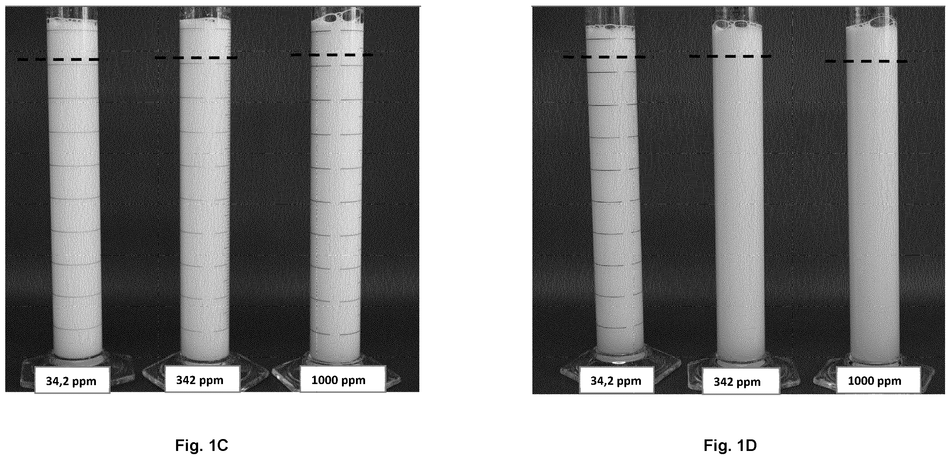

Figure 1C shows the tobacco sucker control aqueous emulsions formed from the NACOL10-98/Polysorbate 80 (cosmetic grade) tobacco sucker control composition (comparative) after 1 hour and Figure 1D shows the tobacco sucker control aqueous emulsions formed from the NACOL10-98/Polysorbate 80 (std. grade) tobacco sucker control composition (comparative) after 1 hour. The dashed line indicates where separation occurs in the emulsion. It is clear that after 60 minutes significant creaming (i.e. separation of the tobacco sucker control aqueous emulsions) had already occurred in the comparative tobacco sucker control aqueous emulsions.

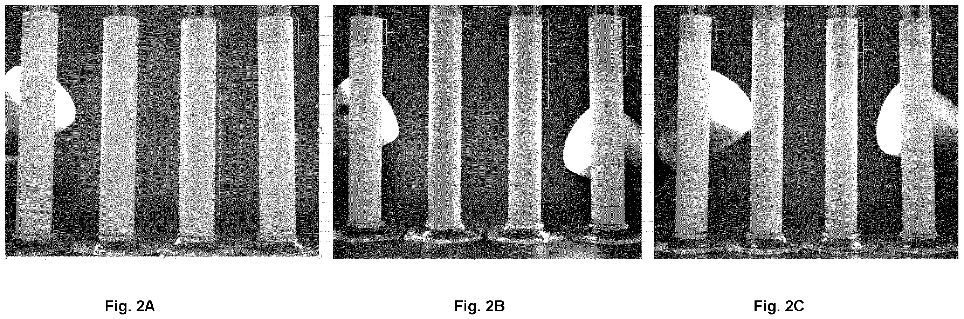

Each of Figures 2A, 2B, and 2C show the emulsion stability after 24 hours of a 5wt% emulsion of (from left to right):

79:21 (w/w) NACOL 10-98/Polysorbate 80 (cosmetic grade) (comparative);
79:21 (w/w) NACOL 10-98/MARLOWET R20 (inventive);
79:21 (w/w) NACOL 10-98/MARLOWET R30 (inventive); and
79:21 (w/w) NACOL 10-98/MARLOWET R50 (inventive);

in 95 wt% water at a hardness of 34.2ppm $CaCl_2$ (Fig. 2A), 342ppm $CaCl_2$ (Fig. 2B), and 1000ppm $CaCl_2$ (Fig. 2C). The brackets shown to the right of each measuring cylinder indicate the extent of separation (creaming) of the emulsions.

The aqueous emulsions produced from the inventive tobacco sucker control compositions showed far superior emulsion stability for all water hardnesses compared to the aqueous emulsions formed from the comparative tobacco sucker control compositions. The inventive tobacco sucker control composition which was prepared with the emulsifier comprising the castor oil ethoxylate MARLOWET R20 showed the best emulsion stability (i.e. the lowest separation creaming) of the inventive tobacco sucker control compositions.

The long-term stability of the tobacco sucker control aqueous emulsions at a water hardness of 342ppm $CaCl_2$ was simulated using a Lumisizer 6112-110 apparatus available from LUM GmbH (Berlin, Germany).

Emulsion stability curves were generated by measuring the time-dependent transmission profile of each sample at rotation speeds of 1000 rpm, 2000 rpm, 3000 rpm, and 4000 rpm. A transmission offset of 10% was used. The relative centrifugal force (RCF) was calculated according to the equation:

$$RCF = \left(\frac{RPM}{1000}\right)^2 \cdot r \cdot 1.118$$

where r corresponds to the radius of the rotor (130 mm).

The actual experimental time ($T_{exp}$) equivalent to a 90-day emulsion stability test was calculated according to the equation:

$$Texp = \ 90 \ \cdot \left(\frac{24}{RCF}\right)$$

The emulsion stability was evaluated by the determined separation velocity. All experiments were carried out in duplicate. The figures showing the emulsion stability curves indicate the change in height (mm) of the transmission offset of 10% relative to the bottom of the cuvette (where the bottom of the cuvette is 130mm and the top of the cuvette is 0mm) as a function of the calculated time (days).

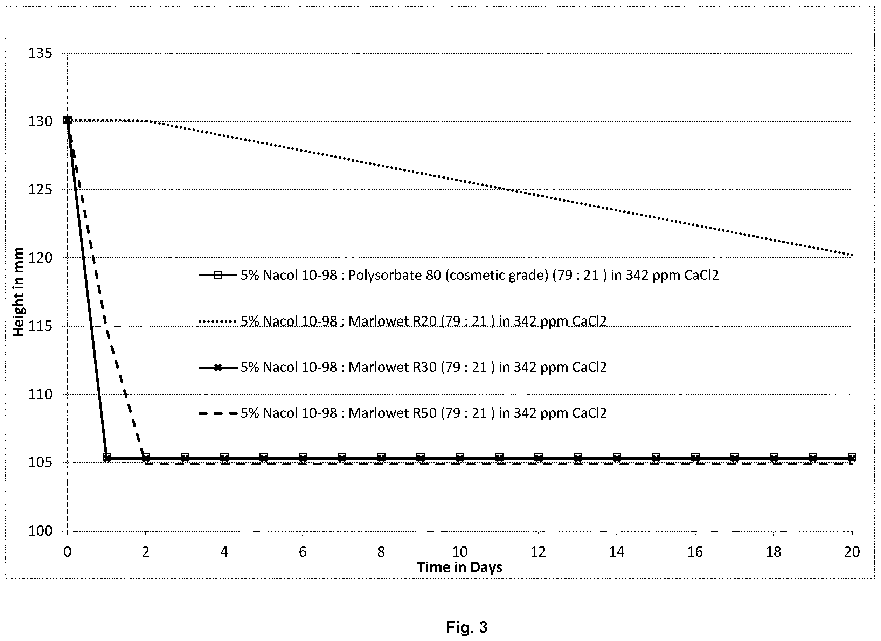

The emulsion stability curves for the tobacco sucker control aqueous emulsions pictured in Figure 2 are shown in Figure 3. Clearly, the inventive composition which was prepared with the emulsifier comprising the castor oil ethoxylate MARLOWET R20 performed best since it showed by far the slowest emulsion separation over time. The comparative tobacco sucker control aqueous emulsion comprising Polysorbate 80 (cosmetic grade) showed a tendency to separate or cream relatively quickly, with noticeable creaming already occurring within one day.

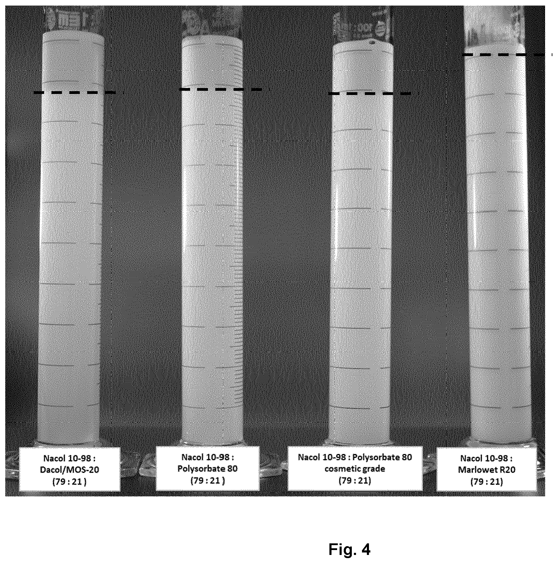

Experiments were conducted using tobacco sucker control compositions comprising 79:21 (w/w) ratio of NACOL 10-98 emulsified in water with Polysorbate 80 (std. grade) (comparative), Polysorbate 80 (cosmetic grade) (comparative), and DACOL MOS 20 (comparative), versus tobacco sucker compositions comprising 79:21 (w/w) ratio of NACOL 10-98 emulsified in water with MARLOWET R20 (inventive). The stability of each of the tobacco sucker control aqueous emulsions in water at a hardness of 342 ppm $CaCl_2$ was monitored visually over a 24-hour period. The results are shown in Table 1 and in Figure 4. In Figure 4, the dashed line indicates where separation occurs in the emulsion.

Table 1

| Composition No. | Alcohol | Emulsifier | Alcohol: Emulsifier ratio (w/w) | Emulsion | Water Hardness | Appearance after 24h, AT |
|---|---|---|---|---|---|---|
| 1* | NACOL 10-98 | DACOL MOS R20 | 79:21 | 5 wt% | 342 ppm $CaCl_2$ | Separated |
| 2* | NACOL 10-98 | Polysorbate 80 (std. grade) | 79:21 | 5 wt% | 342 ppm $CaCl_2$ | Separated |
| 3* | NACOL 10-98 | Polysorbate 80 (cosmetic grade) | 79:21 | 5 wt% | 342 ppm $CaCl_2$ | Separated |
| 4 | NACOL 10-98 | MARLOWET R20 | 79:21 | 5 wt% | 342 ppm $CaCl_2$ | 2 ml creaming |
| * Comparative examples AT = ambient temperature | | | | | | |

No significant stability differences were observed between the tobacco sucker control aqueous emulsions prepared from the comparative tobacco sucker control compositions comprising Polysorbate 80 or DACOL MOS R20, with all comparative tobacco sucker control aqueous emulsions showing emulsion separation after 24 hours. The tobacco sucker control aqueous emulsion prepared from the inventive tobacco sucker control composition comprising the emulsifier MARLOWET R20 showed much better emulsion stability than the comparative tobacco sucker control aqueous emulsions, with only 2 ml creaming after 24 hours.

Further inventive tobacco sucker control compositions comprising the emulsifier including the optional alkyl glycol ester in the form of MARLOWET COE 329 were also prepared. MARLOWET COE 329 is commercially available from Sasol Italy S.p.A. (Milan, Italy).

NACOL 10-98 was emulsified in a 79:21 (w/w) ratio with various emulsifiers comprising 0.5 wt% to 10 wt% MARLOWET COE 329 and 99.5 wt% to 90 wt% MARLOWET R20. The stability of 5wt% emulsions in 342 ppm $CaCl_2$ water hardness were evaluated visually after 24 hours. The results are shown in Table 2.

Table 2

| Compo sition No. | Alcohol | Emulsifier | | Alcohol: Emulsifier ratio (w/w) | Emulsi on | Water Hardness | Appearan ce after 24h, AT |
|---|---|---|---|---|---|---|---|
| | | Vegetable Oil Alkoxylate | Alkyl glycol ester | | | | |
| 5 | NACOL 10-98 | 99.5 wt% MARLOWET R20 | 0.5 wt% MARLOWET COE 329 | 79:21 | 5 wt% | 342 ppm CaCl$_2$ | Stable emulsion |
| 6 | NACOL 10-98 | 99 wt% MAR-LOWET R20 | 1 wt% MARLO-WET COE 329 | 79:21 | 5 wt% | 342 ppm CaCl$_2$ | Stable emulsion |
| 7 | NACOL 10-98 | 98 wt% MAR-LOWET R20 | 2 wt% MARLO-WET COE 329 | 79:21 | 5 wt% | 342 ppm CaCl$_2$ | Stable emulsion |
| 8 | NACOL 10-98 | 97 wt% MAR-LOWET R20 | 3 wt% MARLO-WET COE 329 | 79:21 | 5 wt% | 342 ppm CaCl$_2$ | Stable emulsion |
| 9 | NACOL 10-98 | 96 wt% MAR-LOWET R20 | 4 wt% MARLO-WET COE 329 | 79:21 | 5 wt% | 342 ppm CaCl$_2$ | Stable emulsion |
| 10 | NACOL 10-98 | 95 wt% MAR-LOWET R20 | 5 wt% MARLO-WET COE 329 | 79:21 | 5 wt% | 342 ppm CaCl$_2$ | Stable emulsion |
| 11 | NACOL 10-98 | 92.5 wt% MARLOWET R20 | 7.5 wt% MARLOWET COE 329 | 79:21 | 5 wt% | 342 ppm CaCl$_2$ | Stable emulsion |
| 12 | NACOL 10-98 | 90 wt% MAR-LOWET R20 | 10 wt% MARLO-WET COE 329 | 79:21 | 5 wt% | 342 ppm CaCl$_2$ | Stable emulsion |
| AT = ambient temperature | | | | | | | |

All emulsions were stable over 24 hours.

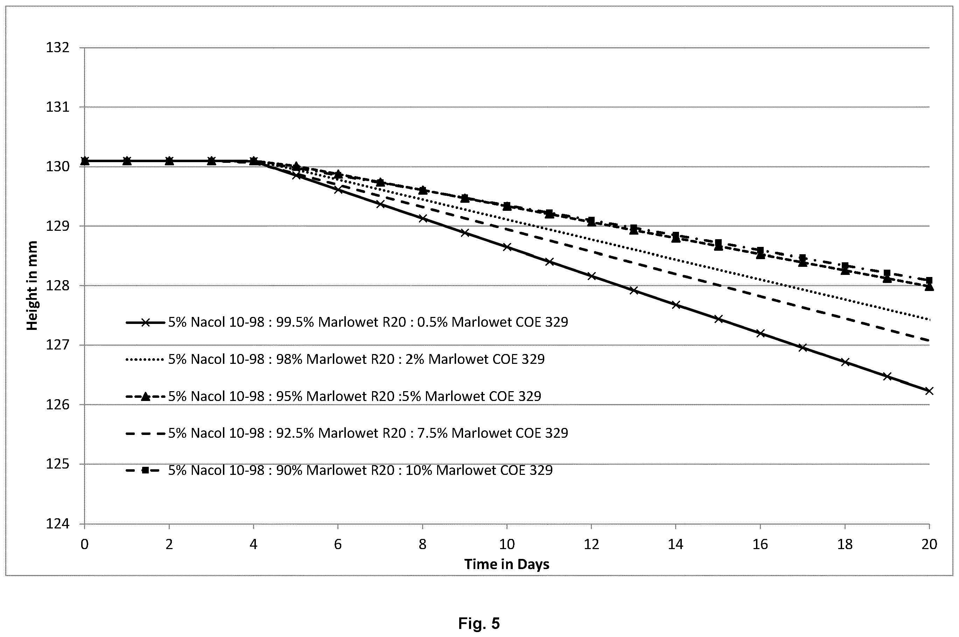

Emulsion stability curves were generated for the aqueous emulsions shown in Table 2 according to the method described above. The results, shown in Figure 5, indicate that all the emulsions were highly stable. Close inspection indicates an increasing emulsion stability with increasing amount of added alkyl glycol ester MARLOWET COE 329. Nevertheless, even at the lowest concentration of MARLOWET COE 329, the emulsion was stable over several days.

Effect of the amount of emulsifier

Using an emulsifier comprising 95 wt% MARLOWET R20 and 5 wt% MARLOWET COE 329 the total amount of emulsifier in the composition was reduced and the stability of the emulsion was evaluated. Results are shown in Table 3 below.

Table 3

| Composition No. | Alcohol | Emulsifier | | Alcohol: Emulsifier ratio (w/w) | Emulsion | Water hardness | Appearance after 24h, RT |
|---|---|---|---|---|---|---|---|
| | | Vegetable Oil Alkoxylate | Alkyl glycol ester | | | | |
| 10 | NACOL 10-98 | 95 wt% MAR-LOWET R20 | 5 wt% MAR-LOWET COE 329 | 79:21 | 5 wt% | 342 ppm CaCl$_2$ | Stable |
| 13 | NACOL 10-98 | 95 wt% MAR-LOWET R20 | 5 wt% MAR-LOWET COE 329 | 81:19 | 5 wt% | 342 ppm CaCl$_2$ | Stable |

Reducing the alcohol-to-emulsifier ratio to 81:19 (w/w) yielded a stable emulsion over 24h.

Overall, the aqueous emulsions prepared from the inventive tobacco sucker control compositions showed superior stability over the aqueous emulsions prepared from the comparative tobacco sucker control compositions.

Unexpectedly, emulsion stability of the aqueous emulsions prepared from the inventive tobacco sucker control compositions improved even further with the inclusion of the alkyl glycol ester in the emulsifier.

Field Tests

To determine the field effectiveness of the inventive tobacco sucker control compositions, field tests were conducted on Virginia flue-cured tobacco of the variety PVH 1920.

Tobacco plants were arranged in plots comprising two rows of 20 tobacco plants each (i.e., 40 tobacco plants). Each row of tobacco plants was 12.2 m long and was separated from the adjacent row by 1.2 m.

Each tobacco sucker control composition was tested across four plots. That is, four replications of each test were conducted ($40 \times 4 = 160$ tobacco plants).

Four control plots were also evaluated. Control plots were plots where the tobacco plants were not treated with any tobacco sucker control composition but were otherwise subjected to the same treatment protocol as those plots which were treated with tobacco sucker control compositions.

Inventive $C_{10}$ fatty alcohol-based tobacco sucker control compositions were compared with the commercially available product Antak (tradename) manufactured by the Drexel Chemical Company (Memphis, TN). Antak is 100% n-decanol in a 79 wt% emulsion.

An inventive $C_8/C_{10}$ mixed fatty alcohol-based tobacco sucker control composition (composition no. 14) was prepared by mixing 42.9g NACOL 8-98 (n-octanol) with 57.1g NACOL 10-98 (n-decanol) and emulsifying the resultant $C_8/C_{10}$ fatty alcohol mixture in an 85:15 (w/w) ratio with an emulsifier comprising 90 wt% MARLOWET R20 and 10 wt% MARLOWET COE329. NACOL 8-98 and NACOL 10-98 are both high purity linear alcohols commercially available from Sasol Germany GmbH (Hamburg, Germany).

This $C_8/C_{10}$ mixed fatty alcohol-based tobacco sucker control composition was compared to the commercially available product Sucker-Plucker (tradename) manufactured by the Drexel Chemical Company (Memphis, TN), which is a mixture of 42.8 wt% n-octanol, 56.9 wt% n-decanol, and 0.3 wt% n-dodecanol, in an 85 wt% emulsion.

The following treatment protocol was followed:

Day 0   tobacco plant seedlings transplanted from green house to field;

Day 75   first application of the tobacco sucker control compositions;

Day 83   mechanical topping of tobacco plants with a DeCloet mechanical topper;

Day 84   second application of the tobacco sucker control compositions;

Day 94   (i) application of flumetralin (Drexalin Plus (tradename) from Drexel Chemical Company) @ 4.7 litres/hectare (0.7 kg a.i./hectare) prior to first harvest;

   (ii) first harvest;

   (iii) application of maleic hydrazide (Super Sucker-Stuff (tradename) from Drexel Chemical Company) @ 9.4 litres/hectare (1.7 kg active ingredient/hectare) after first harvest.

The first application of the $C_{10}$ fatty alcohol-based tobacco sucker control compositions and Antak (tradename) were made using 3% aqueous emulsions of each of the compositions in water, and the second application of the $C_{10}$ fatty alcohol-based tobacco sucker control compositions and Antak (tradename) were made using 4% aqueous emulsions of each of the compositions in water.

The first application of the $C_8/C_{10}$ mixed fatty alcohol-based tobacco sucker control compositions and Sucker-Plucker (tradename) were made using 4% aqueous emulsions of each of the compositions in water, and the second application of the $C_8/C_{10}$ mixed fatty alcohol-based tobacco sucker control compositions and Sucker-Plucker (tradename) were made using 5% aqueous emulsions of each of the compositions in water.

All the tobacco sucker control aqueous emulsions were applied to the tobacco plants using a 2-row, $CO_2$-powered boom research sprayer mounted on a DeCloet high clearance sprayer frame.

No phytotoxicity or undesirable burning of the tobacco plant leaves were observed with any of the tobacco sucker control aqueous emulsions.

Data for sucker control are shown in Table 4. Each data point in Table 4 reflects the average of four replications. The letters "a", "b", and "c" used in conjunction with the data points indicate statistically significant differences. Data points that share the same letter are not significantly different from each other, whereas those data points with different letters are significantly different from the others.

Sucker control was calculated based on the weight of suckers present on the control plots where tobacco plants were topped but not suckered. The average weight of the suckers of the control plots was 12.3 kg of suckers removed from 10 plants. The percent sucker control shown in Table 4 represents the reduction in weight of suckers removed from the plots which were treated with the tobacco control compositions, relative to the control plots.

Data were analysed separately for the $C_{10}$ fatty alcohol-based tobacco sucker control compositions and the $C_8/C_{10}$ mixed fatty alcohol-based tobacco sucker control compositions.

Table 4

| Composition No. | Alcohol | Emulsifier | | Alcohol: Emulsifier ratio (w/w) | Sucker Control (%) | Plants Free of Suckers (%) |
|---|---|---|---|---|---|---|
| | | Vegetable Oil Alkoxylate | Alkyl glycol ester | | | |
| $C_{10}$ fatty alcohol-based tobacco sucker control compositions | | | | | | |
| Antak* | n-decanol | unknown | - | 79:21 | 63.7 be | 10.7 ab |
| 2* | NACOL 10-98 | Polysorbate 80 (std. grade) | - | 79:21 | 77.4 ab | 18.9 ab |
| 4 | NACOL 10-98 | MARLOWET R20 | - | 79:21 | 68.9 abc | 9.7 ab |
| 6 | NACOL 10-98 | 99% MARLOWET R20 | 1% MARLOWET COE329 | 79:21 | 71.9 abc | 7.5 b |
| 12 | NACOL 10-98 | 90% MARLOWET R20 | 10% MARLOWET COE329 | 79:21 | 61.7 c | 14.6 ab |
| $C_8/C_{10}$ mixed fatty alcohol-based tobacco sucker control compositions | | | | | | |
| Sucker-Pluck-er* | n-octanol/ n-de-canol mixture | unknown | - | 85:15 | 71.3 a | 18.5 a |
| 14 | n-octanol/ n-decanol mixture | 90% MARLOWET R20 | 10% MARLOWET COE329 | 85:15 | 71.6 a | 10.7 a |
| * Comparative Composition | | | | | | |

Sucker control for the treatments using the six $C_{10}$ fatty alcohol-based tobacco sucker control compositions ranged from a 61.7% to an 80.6% reduction in the weight of suckers over the control plots. The Antak comparative test resulted in a low level of sucker control, with a sucker control only marginally better than inventive tobacco sucker control composition 12, but statistically there is no difference.

The percent of plants free of suckers (20 plants per plot) is also shown in Table 4. No significant difference could be seen between tobacco sucker control compositions 2 (comparative), 4 (inventive) and 6 (inventive).

There were no significant differences between the treatments based on the $C_8/C_{10}$ mixed fatty alcohol-based tobacco sucker control compositions, with sucker control the percentage sucker control for the comparative and inventive compositions being virtually the same.

Agronomic data are shown in Table 5. Each data point reflects the average of four replications.

Table 5

| Composition No. | Alcohol | Emulsifier | | Alcohol: Emulsifer ratio (w/w) | Yield (kg/hectare) | Grade Index (0-100) |
|---|---|---|---|---|---|---|
| | | Vegetable Oil Alkoxylate | Alkyl glycol ester | | | |
| $C_{10}$ fatty alcohol-based tobacco sucker control compositions | | | | | | |
| Antak* | n-decanol | unknown | - | 79:21 | 3194 | 70.5 |
| 2* | NACOL 10-98 | Polysorbate 80 (std. grade) | - | 79:21 | 3095 | 69.0 |
| 4 | NACOL 10-98 | MARLOWET R20 | - | 79:21 | 3063 | 72.2 |
| 6 | NACOL 10-98 | 99% MARLOWET R20 | 1% MARLOWET COE329 | 79:21 | 2894 | 65.8 |
| 12 | NACOL 10-98 | 90% MARLOWET R20 | 10% MARLOWET COE329 | 79:21 | 2904 | 76.3 |

(continued)

| C$_8$/C$_{10}$ mixed fatty alcohol-based tobacco sucker control compositions | | | | | | |
|---|---|---|---|---|---|---|
| Sucker-Plucker* | n-octanol/ n-decanol mixture | unknown | - | 85:15 | 2958 | 72.0 |
| 14 | n-octanol/ n-decanol mixture | 90% MARLOWET R20 | 10% MARLOWET COE329 | 85:15 | 3005 | 74.0 |
| * Comparative Composition | | | | | | |

Given the similar levels of sucker control observed for the various compositions tested, significant yield differences were not expected. An overall yield range of 290 kg/hectare was observed across the field trials of the C$_{10}$ fatty alcohol-based tobacco sucker control compositions. This can be attributed to normal field variation in trials of this nature as well as to varying degrees water damage in the plots owing to adverse rainfall events which occurred during the field trials. The inventive tobacco sucker control compositions thus had no negative effect on yield.

Grade index was assigned according to the United States Department of Agriculture (USDA) Official Standard Grades for Flue-Cured Tobacco. The Grade Index is a numeric measure of cured leaf quality which translates into crop value.

The Grade Index of the tobacco leaves harvested following the application of inventive tobacco sucker control composition 12 was superior to the two comparative tobacco sucker control compositions.

Overall, no significant differences were observed between the tobacco leaf qualities obtained from the comparative and inventive tobacco sucker control compositions. The inventive tobacco sucker control compositions thus have no negative effect on tobacco leaf quality or crop value.

Advantages of the Invention

Emulsions prepared from the inventive tobacco sucker control composition showed improved emulsion stability over the whole range of water hardness tested, compared to emulsions prepared from the comparative tobacco sucker control compositions. Emulsions prepared from the inventive tobacco sucker control compositions comprising the emulsifier comprising the alkyl glycol ester, unexpectedly showed even better emulsion stability than emulsions prepared from the inventive tobacco sucker control compositions comprising only the vegetable oil alkoxylate.

In the field trials, no phytotoxicity or undesirable burning of the tobacco plant leaves were observed with any of the tobacco sucker control compositions. The inventive tobacco sucker control compositions showed no negative effect on tobacco leave yield and no negative effect on tobacco leaf quality or crop value.

The inventive tobacco sucker control compositions thus represent an improvement over commercially available products, given that the emulsions prepared from the inventive tobacco sucker control compositions showed much improved emulsion stability which is an important practical consideration in tobacco farming operations. Furthermore, the inventive tobacco sucker control compositions performed equally well as the commercially available products and showed no negative effects in terms of in-field tobacco sucker control, tobacco leaf yield, and tobacco leaf quality.

**Claims**

1. A tobacco sucker control composition, the tobacco sucker control composition comprising:

   75 wt% to 90 wt% of a fatty alcohol; and
   25 wt% to 10 wt% of an emulsifier, each based on the total weight of the tobacco sucker control composition;
   wherein the emulsifier comprises a vegetable oil alkoxylate and optionally an alkyl glycol ester.

2. The tobacco sucker control composition as claimed in claim 1, wherein the tobacco sucker control composition comprises from 79 wt% to 85 wt% of the fatty alcohol and from 21 wt% to 15 wt% of the emulsifier, each based on the total weight of the tobacco sucker control composition.

3. The tobacco sucker control composition as claimed in claim 1 or claim 2, wherein the emulsifier comprises from 80 wt% to 100 wt% of the vegetable oil alkoxylate and from 0 wt% to 20 wt% of the alkyl glycol ester, based on the total weight of the emulsifier.

4. The tobacco sucker control composition as claimed in any one of claims 1 to 3, where the fatty alcohol is a C$_6$ to C$_{12}$

linear fatty alcohol.

5. The tobacco sucker control composition as claimed in claim 4, wherein the fatty alcohol is a $C_8$ linear fatty alcohol, a $C_{10}$ linear fatty alcohol, or a mixture of a $C_8$ linear fatty alcohol and a $C_{10}$ linear fatty alcohol.

6. The tobacco sucker control composition as claimed in any one of claims 1 to 5, wherein the vegetable oil alkoxylate is a castor oil alkoxylate.

7. The tobacco sucker control composition as claimed in claim 6, wherein the castor oil alkoxylate is a castor oil ethoxylate having from 5 to 50 mol ethoxylate per triglyceride (number average).

8. The tobacco sucker control composition as claimed in any one of claims 1 to 7, wherein the alkyl glycol ester is obtainable by alkoxylation of a triglyceride, preferably ethoxylation, in the presence of an alcohol, preferably a polyol.

9. The tobacco sucker control composition as claimed in any one of claims 1 to 8, wherein the tobacco sucker control composition further comprises optional ingredients selected from the group comprising pesticides, fertilizers, growth regulators, foam suppressors, drift control agents, and solubilizers.

10. A tobacco sucker control aqueous emulsion, the tobacco sucker control aqueous emulsion comprising:

   1 wt% to 10 wt% of a tobacco sucker control composition as claimed in any one of claims 1 to 9; and
   99 wt% to 90 wt% water, based on the total weight of the tobacco sucker control aqueous emulsion.

11. A use of the tobacco sucker control composition as claimed in any one of claims 1 to 9 for inhibiting sucker growth in tobacco plants.

12. A use of the tobacco sucker control aqueous emulsion as claimed in claim 10 for inhibiting sucker growth in tobacco plants.

13. A method for inhibiting sucker growth in tobacco plants, the method comprising:
   applying the tobacco sucker control aqueous emulsion as claimed in claim 10 to a tobacco plant.

14. The method as claimed in claim 13, wherein applying the tobacco sucker control aqueous emulsion to the tobacco plant is by spray application, preferably by foliar spray application.

Fig. 1B

Fig. 1A

34,2 ppm    342 ppm    1000 ppm

Fig. 1C

34,2 ppm    342 ppm    1000 ppm

Fig. 1D

Fig. 2A

Fig. 2B

Fig. 2C

**Fig. 3**

Fig. 4

Fig. 5

| | Europäisches Patentamt<br>European Patent Office<br>Office européen des brevets | **EUROPEAN SEARCH REPORT** | Application Number<br>EP 23 20 7806 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 98/51148 A1 (UNIROYAL CHEM CO INC [US]; WILEY ROBERT P [GB] ET AL.) 19 November 1998 (1998-11-19) * claim 1 * | 1-14 | INV.<br>A01N31/02<br>A01N25/30<br>A01P21/00 |
| Y | US 2004/054010 A1 (SUTHERLAND TARA D [AU] ET AL) 18 March 2004 (2004-03-18) * paragraph [0018]; claims 1, 5 * | 1-14 | |
| A | WO 96/31749 A1 (ASHLAND INC [US]) 10 October 1996 (1996-10-10) * NS #4 and NS #5; page 10 - page 11 * | 1-14 | |
| | | | **TECHNICAL FIELDS SEARCHED (IPC)**<br><br>A01P<br>A01N |

The present search report has been drawn up for all claims

| Place of search | Date of completion of the search | Examiner |
|---|---|---|
| Munich | 10 April 2024 | Beligny, Samuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 548 764 A1**

## ANNEX TO THE EUROPEAN SEARCH REPORT
## ON EUROPEAN PATENT APPLICATION NO.

EP 23 20 7806

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2024

| Patent document cited in search report | | | Publication date | Patent family member(s) | | | Publication date |
|---|---|---|---|---|---|---|---|
| WO 9851148 | A1 | 19-11-1998 | | AU | 7384398 | A | 08-12-1998 |
| | | | | BR | 9815898 | A | 16-01-2001 |
| | | | | CA | 2288753 | A1 | 19-11-1998 |
| | | | | CN | 1256615 | A | 14-06-2000 |
| | | | | EP | 0981274 | A1 | 01-03-2000 |
| | | | | KR | 20010012220 | A | 15-02-2001 |
| | | | | TR | 199902732 | T2 | 21-09-2000 |
| | | | | WO | 9851148 | A1 | 19-11-1998 |
| US 2004054010 | A1 | 18-03-2004 | | AU | 1484302 | A | 27-05-2002 |
| | | | | CA | 2427876 | A1 | 23-05-2002 |
| | | | | CN | 1474650 | A | 11-02-2004 |
| | | | | EP | 1343373 | A1 | 17-09-2003 |
| | | | | JP | 2004522708 | A | 29-07-2004 |
| | | | | NZ | 525624 | A | 31-10-2003 |
| | | | | US | 2004054010 | A1 | 18-03-2004 |
| | | | | WO | 0239816 | A1 | 23-05-2002 |
| | | | | ZA | 200303556 | B | 10-05-2004 |
| WO 9631749 | A1 | 10-10-1996 | | AU | 689717 | B2 | 02-04-1998 |
| | | | | US | 5565019 | A | 15-10-1996 |
| | | | | US | 5853595 | A | 29-12-1998 |
| | | | | WO | 9631749 | A1 | 10-10-1996 |

EPO FORM P0459

For more details about this annex : see Official Journal of the European Patent Office, No. 12/82